(19) Europäisches Patentamt
European Patent Office
Office européen des brevets

(11) **EP 3 561 449 A1**

(12) **EUROPEAN PATENT APPLICATION**
published in accordance with Art. 153(4) EPC

(43) Date of publication:
**30.10.2019 Bulletin 2019/44**

(51) Int Cl.:
**G01B 17/08** (2006.01)          **G01N 29/04** (2006.01)

(21) Application number: **17884850.3**

(22) Date of filing: **22.12.2017**

(86) International application number:
**PCT/KR2017/015398**

(87) International publication number:
**WO 2018/117756 (28.06.2018 Gazette 2018/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **22.12.2016 KR 20160177199**

(71) Applicant: **Posco**
**Pohang-si, Gyeongsangbuk-do 37859 (KR)**

(72) Inventors:
• **LIM, Choong-Soo**
  **Gwangyang-si**
  **Jeollanam-do 57807 (KR)**
• **HUH, Hyeong-Jun**
  **Gwangyang-si**
  **Jeollanam-do 57807 (KR)**
• **LEE, Sang-Jin**
  **Gwangyang-si**
  **Jeollanam-do 57807 (KR)**

(74) Representative: **Potter Clarkson**
**The Belgrave Centre**
**Talbot Street**
**Nottingham NG1 5GG (GB)**

(54) **APPARATUS FOR MEASURING CRYSTAL GRAIN SIZE OF STEEL SHEET**

(57)    The present invention relates to an apparatus for measuring a crystal grain size of a steel sheet by using an attenuation coefficient of a Rayleigh wave that can guarantee a sufficiently long ultrasound wave propagation distance even in a thin sheet. An apparatus for measuring a crystal grain size of a steel plate according to an embodiment of the present invention may comprises: an ultrasound generating unit for applying ultrasound to one point of a steel sheet; an ultrasound receiving unit for receiving propagated ultrasound at two points spaced different distances apart from the one point of the steel sheet; and a crystal grain size calculating unit for calculating an average crystal grain size of the steel sheet according to intensities of the ultrasound propagated to the two points and an attenuation coefficient according to a distance between the two points. The apparatus can calculate an attenuation coefficient, regardless of a change of surface characteristics, such as surface reflectance, surface roughness, or the like.

【FIG. 1】

**Description**

[Technical Field]

The present disclosure relates to an apparatus for measuring a crystal grain size of a steel sheet.

[Background Art]

In the field of non-destructive inspection, the crystal grain size of a metal is usually measured using an ultrasound attenuation coefficient. In this regard, scattering of ultrasound occurs at a grain boundary when ultrasound propagates inside a material formed of crystal grains such as a metal, attenuation of an ultrasound amplitude occurs, and a degree of attenuation of the ultrasound is correlated with a size of a crystal grain.
Steel sheets, during production in ironworks have various thicknesses according to a product. Among the steel sheets, in the case of an electrical of steel sheet, a thickness thereof is significantly small, for example, about 0.2 mm to 0.3 mm. When a crystal grain size is measured using ultrasound, a longitudinal wave, propagating in a direction perpendicular to a surface of a steel sheet is mainly used, in general.
In other words, a series of sequential signals are measured from ultrasound reflected multiple times in a thickness direction inside a steel sheet, and then a change in signal intensities according to a propagation distance is used to calculate an attenuation coefficient, and a constant correlation is used to obtain a crystal grain size.
In order to increase reliability of measurement of a crystal grain size using an ultrasound attenuation coefficient described above, a large amount of crystal grains should be provided on an ultrasound propagation path. The ultrasound attenuation occurs by absorption of ultrasound by a material, divergence, scattering at a grain boundary, and the like. If the number of crystal grains, provided on an ultrasound path, is small, ultrasound attenuation by scattering at a grain boundary is relatively small, as compared with attenuation by other effects such as absorption or divergence. In this case, it may be difficult to calculate a reliable crystal grain size from the total attenuation coefficient.
Here, as a thickness of a steel sheet is reduced, high-frequency ultrasound with a short wavelength should be used. However, there may be a problem in that it may be difficult to apply to production due to costs and a volume of a product.
Such conventional techniques may be easily understood with reference to Japanese Laid-Open Patent Publication No. 1995-092141 and Japanese Laid-Open Patent Publication No. 1996-075713.

[Disclosure]

[Technical Problem]

An aspect of the present disclosure may provide an apparatus for measuring a crystal grain size of a steel sheet using an attenuation coefficient of a surface wave (a Rayleigh wave) which can guarantee a sufficiently long ultrasound propagation distance, even in a thin sheet using a surface wave.

[Technical Solution]

According to an aspect of the present disclosure, an apparatus for measuring a crystal grain size of a steel sheet includes an ultrasound generating unit applying ultrasound to one point of the steel sheet, an ultrasound receiving unit receiving propagated ultrasound at two points spaced apart from the one point of the steel sheet by different distances, and a crystal grain size calculating unit calculating an average crystal grain size of the steel sheet according to intensities of the ultrasound propagated to the two points and an attenuation coefficient according to a distance between the two points.
According to another aspect of the present invention, an apparatus for measuring a crystal grain size of a steel sheet includes an ultrasound generating unit applying ultrasound to two generating points of a steel sheet, an ultrasound receiving unit receiving propagated ultrasound at two receiving points located between two generating points of the steel sheet, and a crystal grain size calculating unit calculating an average crystal grain size of the steel sheet according to intensities of the ultrasound propagated to the two receiving points and an attenuation coefficient according to a distance between the two points.

[Advantageous Effects]

According to an exemplary embodiment in the present disclosure, even when a thickness of a steel sheet is less, a reliable crystal grain size may be calculated.

[Description of Drawings]

FIG. 1 is a schematic view of an apparatus for measuring a crystal grain size of a steel sheet according to an embodiment.

FIG. 2 is a schematic view illustrating measurement of intensities according to a propagation distance of a surface wave generated by a linear laser pulse at one point of a steel sheet by an apparatus for measuring a crystal grain size of a steel sheet according to an embodiment.

FIG. 3 is a schematic view of an apparatus for measuring a crystal grain size of a steel sheet according to another embodiment.

FIGS. 4A and 4B are schematic views illustrating measurement of intensities according to a propagation distance of a surface wave generated by a linear laser pulse at two points of a steel sheet by an apparatus for measuring a crystal grain size of a steel sheet according to another embodiment.

FIG. 5 is a graph illustrating an intensity measurement result according to a propagation distance of a surface wave by an apparatus for measuring a crystal grain size of a steel sheet according to another embodiment.

[Best Mode for Invention]

Hereinafter, exemplary embodiments of the present disclosure will be described in detail with reference to the accompanying drawings so that those skilled in the technical field to which the present disclosure pertains may easily carry out the exemplary embodiments.

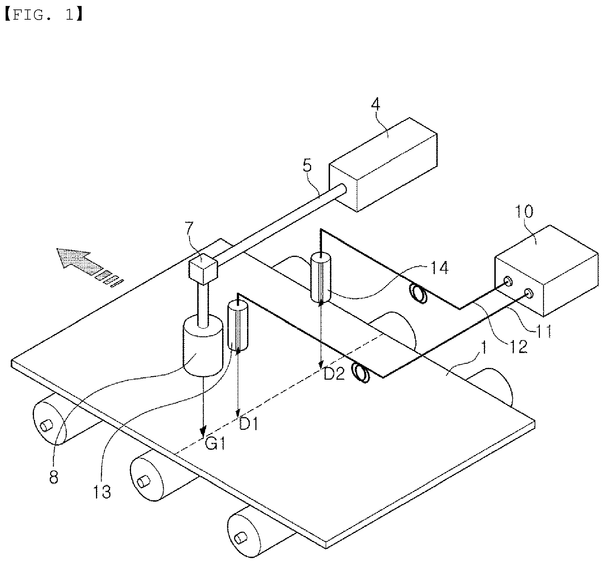

FIG. 1 is a schematic view of an apparatus for measuring a crystal grain size of a steel sheet according to an embodiment.

Referring to FIG. 1, an apparatus for measuring a crystal grain size of a steel sheet according to an embodiment may include an ultrasound generating unit, an ultrasound receiving unit, and a crystal grain size calculating unit.

The ultrasound generating unit may apply ultrasound to one point on a surface of a steel sheet 1.

The ultrasound generating unit may apply ultrasound to one point G1 on a surface of the steel sheet 1 using a pulse laser.

For example, the ultrasound generating unit may include a pulse laser 4, a total reflection mirror 7 reflecting the laser pulse generated from the pulse laser 4, and a pulse condensing head 8 condensing the reflected laser pulse to one point G1 of the steel sheet 1.

The ultrasound receiving unit may receive a surface wave (a Rayleigh wave) of the ultrasound propagated to two points D1 and D2 spaced apart from the one point G1 on a surface of the steel sheet 1 by predetermined distances.

The one point G1, from which the ultrasound is generated, and the two points D1 and D2, receiving a surface wave, may be located on a straight line.

The ultrasound receiving unit may include laser beam transmitting and receiving heads 13 and 14 receiving a surface wave, and optical fibers transmitting the received laser to the crystal grain size calculating unit, in order to receive the surface wave propagated to the two points D1 and D2.

The crystal grain size calculating unit may calculate an average crystal grain size of the steel sheet 1 according to intensities of the ultrasound propagated to the two points D1 and D2 and an attenuation coefficient according to a distance between the two points D1 and D2. To this end, the crystal grain size calculating unit may include a laser and interferometer for measurement 10.

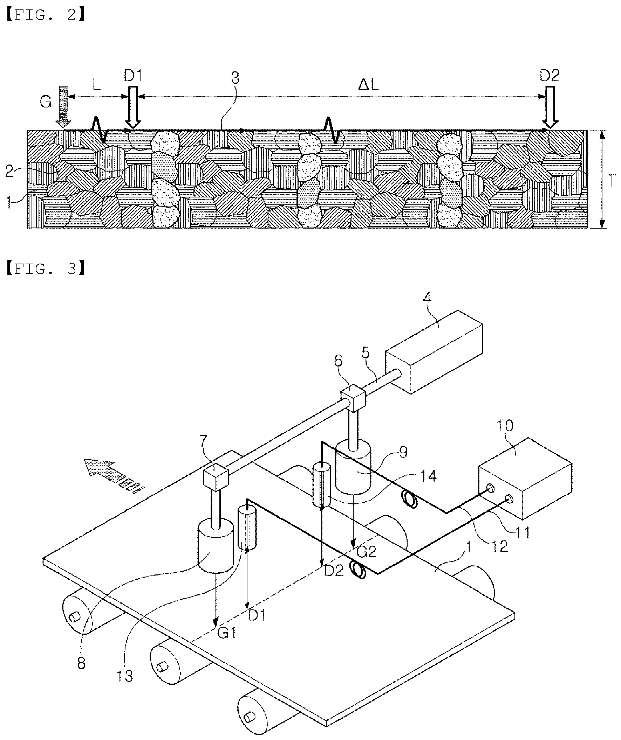

FIG. 2 is a schematic view illustrating measurement of intensities according to a propagation distance of a surface wave generated by a linear laser pulse at one point of a steel sheet by an apparatus for measuring a crystal grain size of a steel sheet according to an embodiment.

Referring to FIG. 2, when a laser pulse is incident on one point G of a surface of the steel sheet 1, while a bulk sound wave (a longitudinal wave and a transverse wave) propagates in a thickness direction of a steel sheet, a surface wave (a Rayleigh wave) also propagates along a surface of the steel sheet. The Rayleigh wave is a type of surface wave, which may be generated when a thickness T of a steel sheet is greater than a wavelength 1 of a surface wave.

$$T \text{ (thickness of steel sheet)} > l \text{ (wavelength of surface wave)} = V_R / f \quad \text{(Equation 1)}$$

In Equation 2, $V_R$ is a velocity of a Rayleigh wave, and f is a frequency of a Rayleigh wave.

For example, in the case of an electrical steel sheet having a thickness of 0.2 mm, in order for a Rayleigh wave to oscillate, it is required that a wavelength of the Rayleigh wave be shorter than 0.2 mm, so a frequency is as follows.

$$f = \frac{v_R}{\lambda} = \frac{3120}{0.2 \times 10^{-3}} = 1.5 \times 10^7 \qquad \text{(Equation 2)}$$

In other words, in a steel sheet, in which ultrasound frequency is 15 MHz or more and a thickness is 0.2 mm, a Rayleigh wave is able to oscillate.

The Rayleigh wave is a type of surface wave formed by combining a bulk sound wave (a longitudinal wave and a transverse wave) with an interface of a material, that is, a surface of a steel sheet. Thus, the Rayleigh wave also has an attenuation phenomenon. Therefore, when intensities of ultrasound measured at two points D1 and D2 on a surface of the steel sheet 1 and a distance DL between two points are obtained, an attenuation coefficient is able to be measured, and the measured attenuation coefficient and the constant calibration curve are used to calculate an average crystal grain size.

As illustrated in FIG. 2, when a surface wave is measured at two points D1 and D2 spaced apart from the ultrasound oscillation point G by predetermined distances, a Rayleigh wave attenuation coefficient is able to be measured. In this case, in order to include a sufficient number of crystal grain sizes between two measuring points D1 and D2, the two measuring points are allowed to have a sufficient distance, so a degree of measurement of an average crystal grain size may be improved.

As illustrated in FIG. 2, the basic premise of calculation of an attenuation coefficient and an average crystal grain size by measuring intensities of a surface wave at two points having a constant distance after ultrasound is generated at one point of a steel sheet is that ultrasound measurement efficiency at two points should be the same. As an example of a laser interferometer for non-contact remote ultrasonic measurement, the measurement principle of the Fabry-Perot laser interferometer is as follows.

1) Irradiating laser light for measurement onto a measuring point;
2) Laser light, reflected by the measuring point, is collected to incident on a resonator (a cavity) forming an interferometer;
3) Both ends of a resonator are composed of partially reflective mirrors with high reflectance and light, flowing into the resonator, is reflected multiple times through mirrors at both ends;
4) Respective pieces of light, reflected multiple times inside the resonator, interfere with each other to determine an amount of light passing through the partially reflective mirror;
5) When ultrasound reaches a position to which the laser light for measurement is irradiated, the surface displacement occurs and the frequency shift of the reflected laser light occurs due to the Doppler effect; and
6) The frequency shift of the reflected laser light by the ultrasound changes interference conditions due to multiple reflections inside the resonator, and thus induces a change in an amount of transmitted light and obtains an ultrasonic signal therefrom.

A size of a signal of an interferometer, obtained through the procedures of 1) to 6), is determined by an amount of the frequency shift by the ultrasound and an amount of reflected light flowing in an interferometer. Thus, in order to perform ultrasound intensity measurement under consistent conditions, an interferometer inflow light amount should be constant at all times. When intensities of laser light for measurement irradiated to a steel sheet are maintained to be constant, the interferometer inflow light amount is determined by a reflection pattern according to reflectance (= an incident light amount - an absorption light amount) of a steel sheet at a measuring point and surface roughness.

The purpose of the present disclosure is to calculate a crystal grain size on-line while a steel sheet is transferred in a real production line of a thin sheet such as an electrical steel sheet. Here, a type of steel and component of a thin sheet, reflectance according to surface cleanliness, and surface roughness may be easily changed. Thus, even when intensities of laser light irradiated on a steel sheet are maintained constant at all times, intensities of reflected light flowing in an interferometer may be changed.

FIG. 3 is a schematic view of an apparatus for measuring a crystal grain size of a steel sheet according to another embodiment.

Referring to FIG. 3, an ultrasound generating unit of an apparatus for measuring a crystal grain size of a steel sheet according to another embodiment may further include a partially reflective mirror 6 and a pulse condensing head 9, in order to apply ultrasound to two generating points G1 and G2, as compared with the ultrasound generating unit of FIG. 1.

Two generating points G1 and G2 and two receiving points D1 and D2 may be located on a straight line.

In other words, pulsed light 5, generated from a pulse laser 4 having a short pulse width, is divided into two pieces of pulsed light at the partially reflective mirror 6, and the two pieces of pulsed light are transmitted to two condensing heads 8 and 9, respectively. The condensing heads 8 and 9 allow the pulsed light to be condensed on a surface of a steel sheet while having the proper size and shape, thereby generating ultrasound. The laser light, generated by the laser for ultrasound measurement 10, is transmitted to two laser beam transmitting and receiving heads 13 and 14 through two optical fibers 11 and 12. The laser beam transmitting and receiving heads 13 and 14 condense laser light on a surface of a steel sheet and collect reflected laser light simultaneously, thereby transmitting the laser light to the interferometer for ultrasound measurement 10 through the optical fibers 11 and 12.

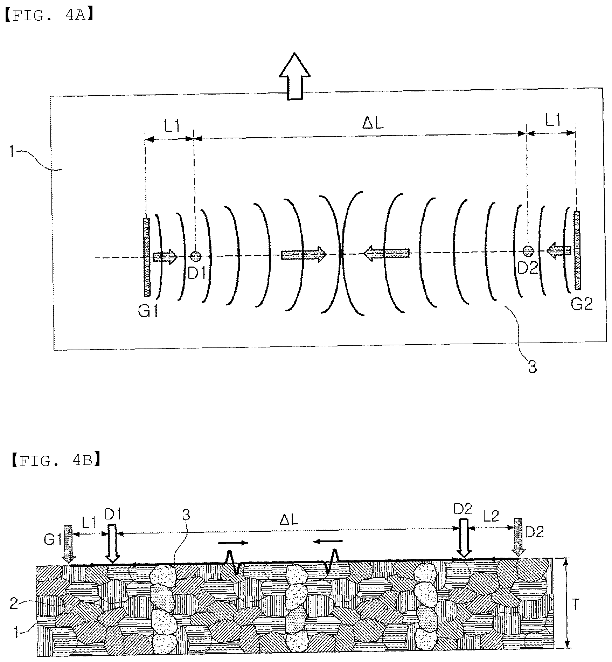

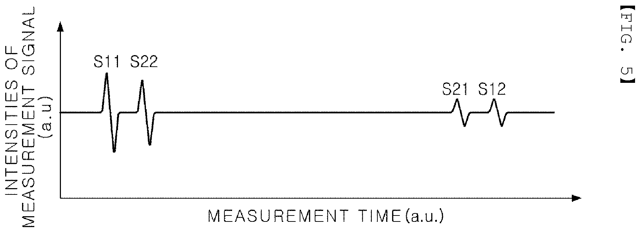

Other configurations of the ultrasound generating unit, and configurations of the ultrasound receiving unit and the crystal grain size calculating unit are the same as those of the ultrasound generating unit, the ultrasound receiving unit, and the crystal grain size calculating unit in the description in FIG. 1, so a detailed description thereof will be omitted. FIGS. 4A and 4B are schematic views illustrating measurement intensities according to a propagation distance of a surface wave generated by linear laser pulse at two points of a steel sheet by an apparatus for measuring a crystal grain size of a steel sheet according to another embodiment, and FIG. 5 is a graph illustrating an intensity measurement result according to a propagation distance of a surface wave by an apparatus for measuring a crystal grain size of a steel sheet according to another embodiment.

In another embodiment of the present disclosure, in order to correct an error according to a change in an interferometer incident light amount described above, as illustrated in FIGS. 4A and 4B, pieces of ultrasound (a surface wave) are generated simultaneously at two points G1 and G2, on a surface of a steel sheet, spaced apart from each other to include a plurality of crystal grain sizes on a propagation path of the Rayleigh wave, respectively, and pieces of ultrasound, which sequentially arrive, are measured at two points D1 and D2, located between two ultrasound generating points, respectively. Thus, a total of four surface wave signals are secured, and an effect of a change in ultrasound intensities at an oscillation position and a change in laser reflectance at a measuring point on calculation of an attenuation coefficient may be fundamentally corrected.

In this case, two measuring points are allowed to have a sufficient distance to include a sufficient number of crystal grain sizes between the two measuring points D1 and D2, so a degree of measurement of an average crystal grain size may be improved.

A waveform of a surface wave, measured using the method described of each of FIGS. 4A and 4B, is illustrated in FIG. 5. The four signals, measured in FIG. 5, are as follows. In FIGS. 4A and 4B, it is assumed that L1 is greater than L2.

$S_{11}$: Ultrasonic signal intensity obtained by measuring ultrasound, generated by laser pulse G1, by laser beam D1
$S_{22}$: Ultrasonic signal intensity obtained by measuring ultrasound, generated by laser pulse G2, by laser beam D2
$S_{12}$: Ultrasonic signal intensity obtained by measuring ultrasound, generated by laser pulse G1, by laser beam D2
$S_{21}$: Ultrasonic signal intensity obtained by measuring ultrasound, generated by laser pulse G2, by laser beam D1

Intensities of the measurement signals may be described as the following Equation according to the ultrasound generation condition and measurement condition.

$$S_{ij} = A_i \times R_j \times K_j \times e^{-\alpha L_{ij}} \quad (i = 1 \text{ OR } 2, \ j = 1 \text{ OR } 2) \qquad \text{(Equation 3)}$$

In Equation 3, Sij is an ultrasonic signal, obtained by measuring ultrasound, generated by laser pulse $G_i$, by laser beam $D_j$, $A_i$ is an initial intensity of a surface wave generated by laser pulse $G_i$, $R_j$ is a laser reflectance at a measuring position $D_j$, $k_j$ is a Factor of a reflection pattern by surface roughness at a measuring position Di, a is an attenuation coefficient, and $L_{ij}$ is a propagation distance of a surface wave. From Equation 3, two measurement equations may be obtained.

$$\frac{S_{12}}{S_{11}} = \frac{A_1 \times R_2 \times K_2}{A_1 \times R_1 \times K_1} e^{-\alpha \cdot \Delta L} = \frac{R_2 \times K_2}{R_1 \times K_1} e^{-\alpha \cdot \Delta L} \qquad \text{(Equation 4)}$$

$$\frac{S_{21}}{S_{22}} = \frac{A_2 \times R_1 \times K_1}{A_2 \times R_2 \times K_2} e^{-\alpha \cdot \Delta L} = \frac{R_1 \times K_1}{R_2 \times K_2} e^{-\alpha \cdot \Delta L} \qquad \text{(Equation 5)}$$

From Equation 4 and Equation 5, the following Equation 6 may be obtained.

$$\left(\frac{S_{12}}{S_{11}}\right) \times \left(\frac{S_{21}}{S_{22}}\right) = \left(\frac{R_2 \times K_2}{R_1 \times K_1}\right) \times \left(\frac{R_1 \times K_1}{R_2 \times K_2}\right) \times e^{-\alpha \cdot \Delta L} \times e^{-\alpha \cdot \Delta L} = e^{-\alpha \cdot 2\Delta L}$$

(Equation 6)

Using Equation 6, from a total of four ultrasound intensities signals, an accurate ultrasound attenuation coefficient (a) may be obtained regardless of steel sheet surface conditions, such as a reflectance at a measuring point, surface roughness, or the like.

As described above, according to the present disclosure, as ultrasound is generated at at least one point of a steel sheet and intensities of a surface wave are measured at two points sufficiently spaced apart from the point, an attenuation coefficient of the surface wave, passing through a sufficiently large amount of crystal grains, is measured, so a reliable crystal grain size may be calculated, even when a thickness of a steel sheet is small.

The present invention described above is not limited to the above-described embodiment and the accompanying drawings, but is limited by the following claims, and it will be understood by those skilled in the art that various changes and modifications may be made in the configuration of the present invention within departing from the scope of the invention.

**Claims**

1. An apparatus for measuring a crystal grain size of a steel sheet, comprising:

   an ultrasound generating unit applying ultrasound to one point of the steel sheet;
   an ultrasound receiving unit receiving propagated ultrasound at two points spaced apart from the one point of the steel sheet by different distances; and
   a crystal grain size calculating unit calculating an average crystal grain size of the steel sheet according to intensities of the ultrasound propagated to the two points and an attenuation coefficient according to a distance between the two points.

2. The apparatus for measuring a crystal grain size of a steel sheet of claim 1, wherein the ultrasound receiving unit receives a surface wave of the ultrasound propagated to the two points from the one point of the steel sheet.

3. The apparatus for measuring a crystal grain size of a steel sheet of claim 1, wherein ultrasound measurement efficiency at the two points of the ultrasound receiving unit is the same.

4. The apparatus for measuring a crystal grain size of a steel sheet of claim 1, wherein the ultrasound generating unit generates ultrasound using a pulse laser.

5. An apparatus for measuring a crystal grain size of a steel sheet, comprising:

   an ultrasound generating unit applying ultrasound to two generating points of a steel sheet;
   an ultrasound receiving unit receiving propagated ultrasound at two receiving points located between two generating points of the steel sheet; and
   a crystal grain size calculating unit calculating an average crystal grain size of the steel sheet according to intensities of the ultrasound propagated to the two receiving points and an attenuation coefficient according to a distance between the two points.

6. The apparatus for measuring a crystal grain size of a steel sheet of claim 5, wherein the ultrasound receiving unit receives a surface wave of the ultrasound propagated to the two receiving points from the two generating points of the steel sheet.

7. The apparatus for measuring a crystal grain size of a steel sheet of claim 5, wherein the crystal grain size calculating unit calculates an attenuation coefficient from four surface wave signals propagated to the two receiving points.

8. The apparatus for measuring a crystal grain size of a steel sheet of claim 5, wherein the ultrasound generating unit includes a pulse laser generating ultrasound at the two generating points.

【FIG. 1】

【FIG. 2】

【FIG. 3】

【FIG. 4A】

【FIG. 4B】

【FIG. 5】

## INTERNATIONAL SEARCH REPORT

| | International application No. |
|---|---|
| | **PCT/KR2017/015398** |

### A. CLASSIFICATION OF SUBJECT MATTER

*G01B 17/08(2006.01)i, G01N 29/04(2006.01)i*

According to International Patent Classification (IPC) or to both national classification and IPC

### B. FIELDS SEARCHED

Minimum documentation searched (classification system followed by classification symbols)
G01B 17/08; G01N 29/20; G01B 17/00; G01N 29/00; G01N 29/18; G01N 29/04; G01N 21/86

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: steel sheet, grain size, ultrasonic waves, pulse laser, distance, Rayleigh wave

### C. DOCUMENTS CONSIDERED TO BE RELEVANT

| Category* | Citation of document, with indication, where appropriate, of the relevant passages | Relevant to claim No. |
|---|---|---|
| X | JP 2006-284349 A (NIPPON STEEL CORP.) 19 October 2006 | 1,3-4 |
| | See paragraphs [0014], [0019]-[0020], [0035]-[0038] and figure 1. | |
| Y | | 2 |
| A | | 5-8 |
| Y | JP 06-308100 A (NIPPON STEEL CORP.) 04 November 1994 | 2 |
| | See abstract, paragraphs [0004]-[0006], [0009]-[0012] and figure 1. | |
| X | JP 10-038862 A (SUMITOMO METAL IND. LTD.) 13 February 1998 | 1,3-4 |
| | See abstract, paragraph [0042], claim 1 and figures 1-2. | |
| Y | | 2 |
| A | KR 10-2013-0014817 A (POSCO) 12 February 2013 | 1-8 |
| | See paragraphs [0035]-[0047], [0060]-[0067] and figure 1. | |
| A | KR 10-2010-0034283 A (NIPPON STEEL CORPORATION et al.) 01 April 2010 | 1-8 |
| | See paragraphs [0013]-[0014], claim 1 and figure 3. | |

☐ Further documents are listed in the continuation of Box C.       ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 MARCH 2018 (23.03.2018) | **23 MARCH 2018 (23.03.2018)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2017/015398**

| Patent document cited in search report | Publication date | Patent family member | Publication date |
|---|---|---|---|
| JP 2006-284349 A | 19/10/2006 | JP 4528186 B2 | 18/08/2010 |
| JP 06-308100 A | 04/11/1994 | NONE | |
| JP 10-038862 A | 13/02/1998 | NONE | |
| KR 10-2013-0014817 A | 12/02/2013 | KR 10-1253909 B1 | 16/04/2013 |
| KR 10-2010-0034283 A | 01/04/2010 | KR 10-1008172 B1 | 13/01/2011 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7092141 A

- JP 8075713 A